Europäisches Patentamt

European Patent Office

Office européen des brevets

(19)

(11) Veröffentlichungsnummer: **0 129 856**
**A2**

(12) # EUROPÄISCHE PATENTANMELDUNG

(21) Anmeldenummer: 84107128.5

(22) Anmeldetag: 20.06.84

(51) Int. Cl.⁴: **C 10 L 5/40**
**B 30 B 11/24, B 30 B 15/00**

(30) Priorität: 21.06.83 DE 3322273
29.02.84 DE 3407471

(43) Veröffentlichungstag der Anmeldung:
02.01.85 Patentblatt 85/1

(84) Benannte Vertragsstaaten:
AT CH DE FR IT LI SE

(71) Anmelder: Ries, Walter
Von-Salza-Strasse 60
D-6990 Bad Mergentheim(DE)

(72) Erfinder: Ries, Walter
Von-Salza-Strasse 60
D-6990 Bad Mergentheim(DE)

(74) Vertreter: Pätzold, Herbert, Dr.-Ing.
Mühlthaler Strasse 102
D-8000 München 71(DE)

(54) Verfahren und Vorrichtung zur Erzeugung von Presslingen, insbesondere als Biobrennstoff.

(57) Es handelt sich um ein Verfahren und eine Vorrichtung zur Erzeugung von Preßlingen insbesondere aus naturfeuchter Biomasse, Die Preßlinge sollen lagerfähig sein und als Biobrennstoff verwendbar sein. In der Vorrichtung, die z.B. wenigstens aus einem Häcksler und wenigstens einer Schneckenpresse besteht, wird die aufgegebene Biomasse auf eine bestimmte Teilchengröße zerkleinert. Das Zerkleinerungsgut wird mit einem nicht oxidierten plastischen mikrokristallinen Wachs (Recyclingwachs) innig vermischt, ehe es über die Schneckenpresse in einen Verdichtungsraum gepreßt wird um wenigstens einen Preßling zu bilden. Bei Biomassen mit relativ hohen Feuchtigkeitsgehalten, insbesondere naturfeuchten Biomassen, wird zur Bindung der Feuchte ein mit dem mikrokristallinen Wachs verträgliches anorganisches Adsorptionsmittel, insbesondere Natrium- oder Kaliumaluminiumsilikat, vor der Wachsbeimengung zugemischt.

EP 0 129 856 A2

Walter Ries
6990 Bad Mergentheim

Verfahren und Vorrichtung zur Erzeugung
von Preßlingen, insbesondere als Biobrennstoff

Die Erfindung bezieht sich auf ein Verfahren und eine
Vorrichtung zur Durchführung des Verfahrens zur Erzeugung
von Preßlingen, wie Briketts, Cobs oder Pellets von gewählter Festigkeit, insbesondere als Biobrennstoff und/
oder Biokompost (Torfersatz), vorwiegend aus naturfeuchten land- und forstwirtschaftlichen sowie gartenbaulichen Reststoffen oder aus entsprechend verwertbaren
Gewerbemüllbestandteilen.

Es handelt sich also vorzugsweise um ein Energierückgewinnungsverfahren und -vorrichtung, aus brennbaren
land-, garten- und forstwirtschaftlichen Produktionsrückständen oder aus ausgesuchten, problemlos verbrennbaren Abfällen von Haus- und Gewerbebetrieben.

Es sind Verfahren und Vorrichtungen zur Erzeugung von Biobrennstoffen in der Gestalt von lagerfähigen Briketts,
Cobs oder Pellets bekannt geworden. Trotz des weltweiten
großen Anfalls von als Brennstoff nutzbaren Reststoffen
vor allem aus der Land-, Garten- und Forstwirtschaft
(z.B. Sträucher, Äste, Baumrinden, Reben, Getreidestroh,
Laub, Obst- und Gemüsestände, Unkraut, Gräser usw.) haben
sich die bekannt gewordenen Verfahren und Vorrichtungen
zur Brikettierung und Pelletierung von Biomassen aus
verschiedenen Gründen nicht durchsetzen können.

1. Bekannte Anlagen zum Brikettieren und Pelletieren von
Biomasse arbeiten mit derart hohen Energiekosten, daß die

- 2 -

0129856

hergestellten Biobrennstoffe mit den herkömmlichen
Brennstoffen wirtschaftlich nicht konkurrenzfähig
sind. Das liegt unter anderem auch daran, daß die bekannten Anlagen als Großanlagen konzipiert sind, so
daß die zu verarbeitende Biomasse über größere
Transportwege von vielen verschiedenen Orten, wo sie
in unterschiedlichen Mengen anfällt, erst herangeschafft werden muß, um die Großanlagen voll auslasten
zu können.

2. Die bekannten Anlagen arbeiten auch deswegen unwirtschaftlich, weil ein erheblicher Energieaufwand
notwenidg ist, um die naturfeuchten Biomassen mit bis
zu ca. 40 bis 50 % Wassergehalt auf ca. 10 bis 15 %
Wassergehalt zu trocknen. Derartige energieaufwendige
Trocknungsverfahren sind bei den bekannten Vorrichtungen
aber erforderlich, weil ohne diese lagerfähige Briketts,
Cobs oder Pellets nicht herstellbar sind.

Aufgabe der Erfindung ist es daher, ein Verfahren und
eine Vorrichtung zur Durchführung des Verfahrens der
eingangs genannten Art anzugeben, wodurch erstmals
ein neuer Weg aufgezeigt wird, naturfeuchte Biomassen
auch mit kleineren Aggregaten wirtschaftlich zu
Briketts, Cobs oder Pellets verarbeiten zu können. Die
erfindungsgemäße Vorrichtung soll damit konstruktiv
besonders einfach ausgebildet und mit weitgehend geringem Energieaufwand betreibbar sein. Sie soll gegebenenfalls auch mobil konzipierbar sein, um sie
möglichst nahe an den Ort heranbringen zu können, wo
die Biomasse angefallen ist. Trotz Verarbeitung auch
von naturfeuchter Biomasse soll erfindungsgemäß eine
energieaufwendige Vortrocknung nicht notwendig sein, um weitgehend unbegrenzt lagerfähige Briketts, Cobs
oder Pellets herstellen zu können, die mit herkömmlichen Brennstoffen wirtschaftlich konkurrenzfähig sind.

Das erfindungsgemäß Verfahren und die zugehörige Vorrichtung soll damit die Herstellung von Biobrennstoffen ermöglichen, die problemlos lagerfähig und umweltfreundlich verbrennbar sind.

Die vorstehende Aufgabe wird erfindungsgemäß mit den
kennzeichnenden Merkmalen des Anspruches 1 gelöst.
Vorteilhafte Ausführungen und Weiterbildungen nach
der Erfindung ergeben sich aus den Merkmalen der
Unteransprüche.

Die Erfindung wird lediglich anhand von Ausführungsbeispielen beschrieben, die in einer Zeichnung
nur schematisch dargestellt sind. Hierin zeigt bzw.
zeigen

Figur 1a und 1b     einen Längsschnitt durch eine
        stationäre Biomassen-Zerkleinerungs-
        und Verdichtungsanlage gemäß
        der Erfindung;

Figur 2           einen Querschnitt gemäß A - A

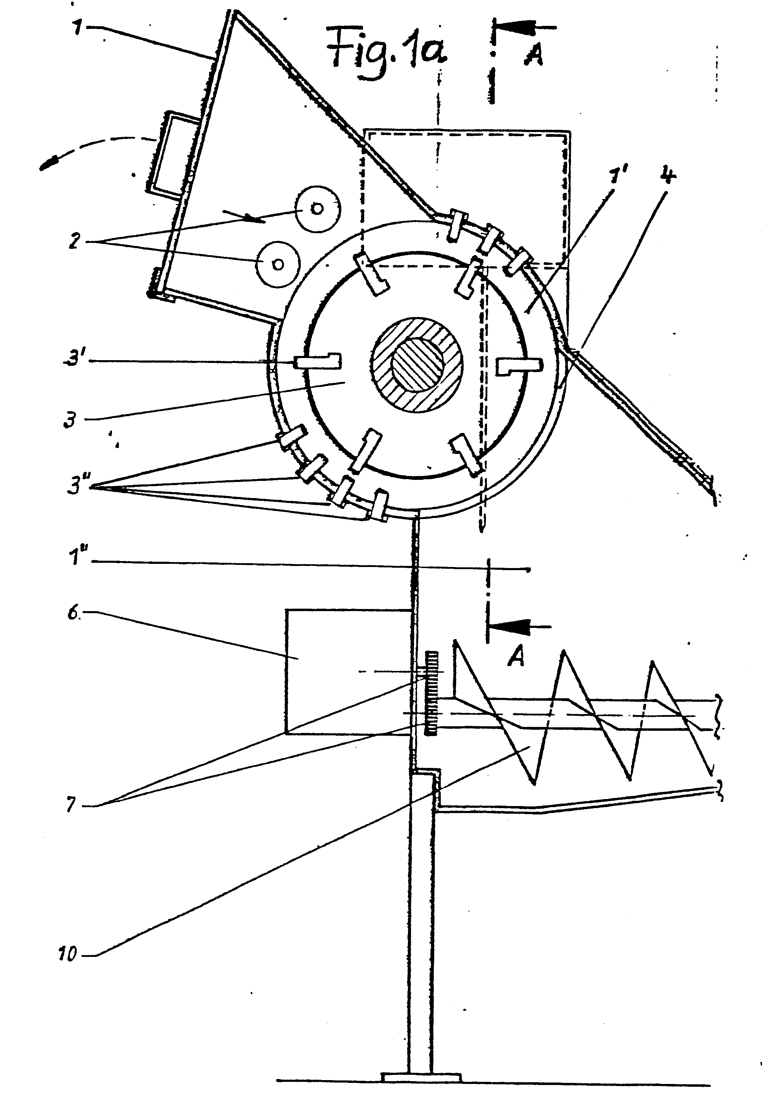

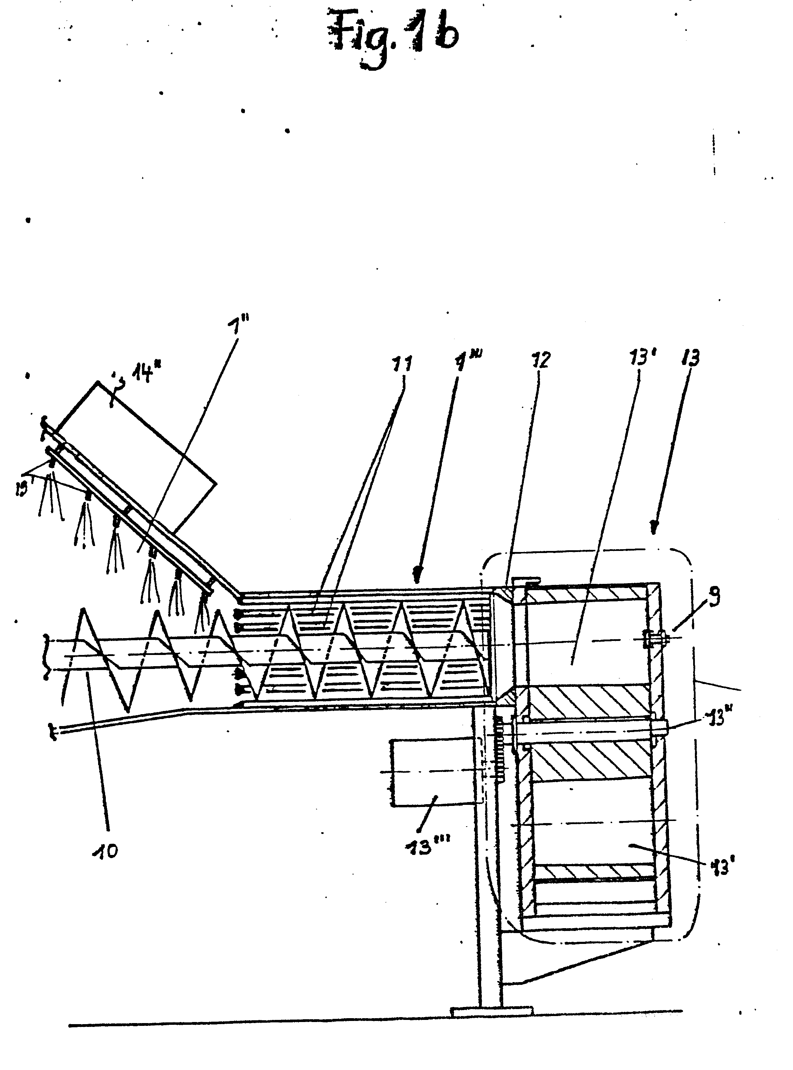

        in Fig. 1a

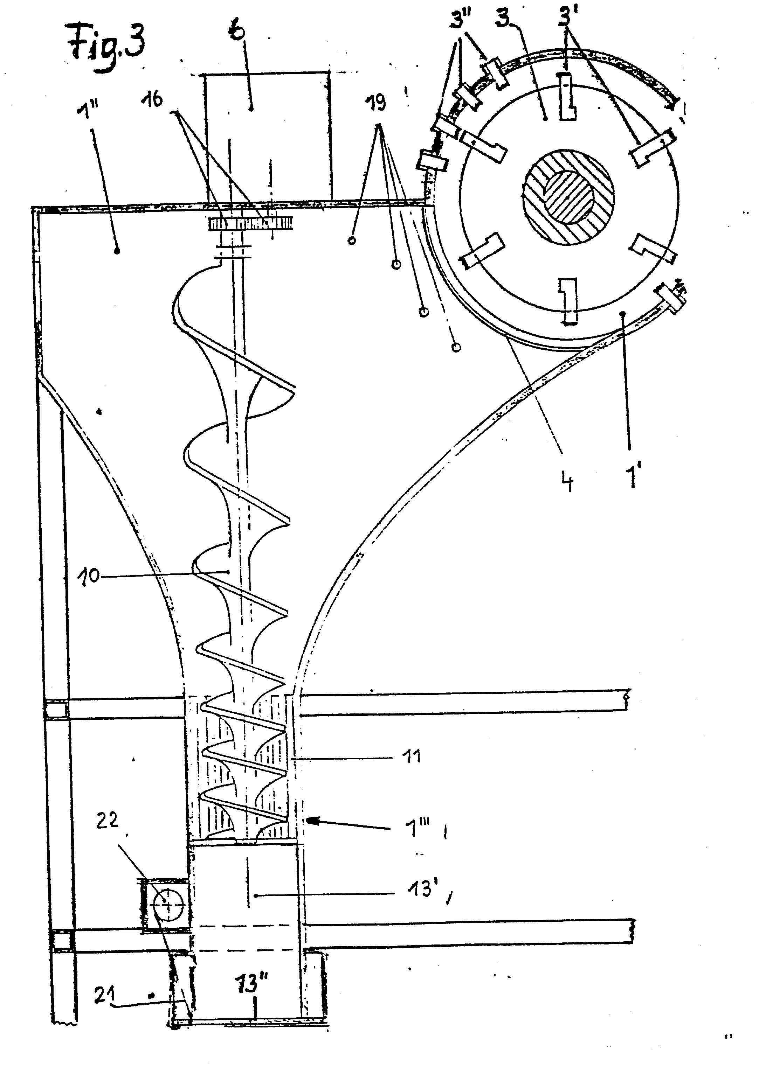

Figur 3           einen Längsschnitt durch eine
        weitere Biomassen-Zerkleinerungs-
        und Verdichtungsanlage ähnlich
        der nach Fig. 1a und 1b;

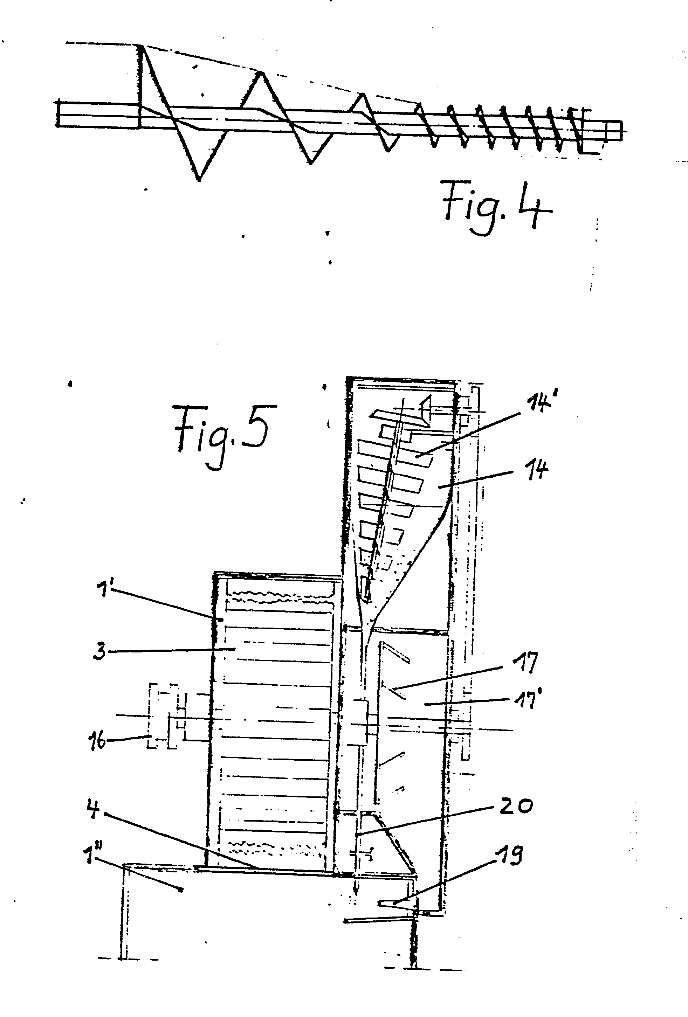

Figur 4         eine in den Zerkleinerungs- und
                Verdichtungsanlagen nach Fig. la
                und lb oder Fig. 3 verwendbare
                Preßschnecke;

Figur 5         einen Schnitt entsprechend A - A
                in Fig. la durch eine erfindungsgemäße Verdichtungsanlage ähnlich
                der nach Fig. la und lb mit einer
                Zusatzeinrichtung zur dosierten
                Zugabe von Bindemittel.

Figur la und lb zeigen auf zwei Blättern gemeinsam einen
Längsschnitt durch eine erfindungsgemäße Biomassenzerkleinerungs- und Verdichtungsanlage als eine Baueinheit
mit einem die Zerkleinerungs- und die Verdichtungsanlage
umfassenden gemeinsamen Gehäuse mit einer Einwurfklappe 1,
die am Einwurfende eines Aufgabetrichters für die rohe,
unzerkleinerte Biomasse verschwenkbar angebracht ist.
Innerhalb des Aufgabetrichters befinden sich zwei Förder-
oder Aufgaberollen 2, über die die aufgegebene Biomasse
einem an sich bekannten Häcksler bzw. einer Hammer- oder
Schlagmühle zugeführt wird, die aus einem Rotor 3 mit
am Umfang schwenkbar gelagerten Schlägern oder Hämmern 3'
bestehen, welche mit mehreren im Trommelgehäuse 1' für den
Rotor 3 radial nach innen vorstehenden Schlagleisten 3"
zusammenwirken. Im offenen Boden des Trommelgehäuses 1'
befindet sich ein Sieb 4, dessen Maschen- bzw. Lochweiten
die Größe des Zerkleinerungsgutes bestimmen, das durch das
Sieb 4 hindurch in den Gehäuseraum 1" unterhalb des
Häckslers bzw. der Hammer- oder Schlägermühle fällt.
Dieser Gehäuseraum 1" besitzt im Beispielsfalle einen im
wesentlichen dreieckigen Querschnitt mit einer etwa waagerechten Bodenfläche, einer an das eine Ende des
Rotorgehäusebodens anschließenden etwa senkrechten
Stirnfläche und einer an das andere Ende des
Rotorgehäusebodens angrenzenden Schrägfläche. Auf
diese Weise schließt der Gehäuseraum 1" trichterförmig an einen zylindrischen oder in Austrittsrichtung leicht konischen Gehäuseraum 1"' an, der
innenseitig mit achsparallelen metallischen Leisten
11 versehen ist, die über den Umfang des Gehäuseraumes mit geringem Abstand aufeinanderfolgen und
die messerartige Schneidkanten aufweisen, die den
freien zylindrischen oder leicht konischen Gehäuseraum 1"' begrenzen, der damit ein sogenanntes Messerrohr im Anschluß an das Trichtergehäuse 1" bildet.
An das Messerrohr 1"' schließt eine Trommel 13 mit
mehreren z.B. vier zylindrischen Verdichtungskammern
13' an, die über den Trommelumfang gleichmäßig verteilt angeordnet sind. Durch Drehen der Trommel 13 um
ihre Achse 13" in einem Trommelgehäuse mittels eines
Antriebes 13"', werden die Verdichtungskammern 13'
der Trommel 13 nacheinander vor die Austrittsöffnung
des Messerrohres 1"' gedreht. Wenn sich eine Verdichtungskammer 13' koaxial vor dem Messerrohr 11"'
befindet, liegt eine andere mit einem Preßling gefüllte Kammer vor einer nicht gezeigten Auswurfvorrichtung, die den Preßling aus der Verdichtungskammer
durch eine Öffnung im Trommelgehäuse herausschiebt.
Die Verdichtungskammern 13' weisen dabei einen etwas
kleineren Durchmesser als der freie Durchmesser des
Messerrohres 1"' auf. Zum Anschluß des Messerrohres 1"'
mit dem größeren Innenraumdurchmesser an eine Verdichtungskammer 13' mit einem kleineren Innenraumdurchmesser ist am Austrittsende des Messerrohres 1"'
ein konischer Zwischenring 12 vorgesehen. Am Boden
des Trommelgehäuses befindet sich gegenüber dem
Austrittszentrum des Messerrohres 1"' ein Druckschalter 9, der bei einem bestimmten Preßdruck der Biomasse in
der Kammer 13 ein elektrisches Signal zur Steuerung
des Antriebes 13"' abgibt, der daraufhin die
Trommel 13 weiterdreht, um eine leere Verdichtungskammer vor das Messerrohr 1"' zu drehen.

Innerhalb des Trichtergehäuses 1" ist eine Preßschnecke 10 drehbar gelagert, deren Achse im Beispielsfalle etwa parallel zur im wesentlichen
horizontalen Bodenfläche des Trichtergehäuses 1" verläuft.

Es ist klar, daß die Erfindung nicht auf eine derartige Lage der Preßschnecke und ihre Anordnung gegenüber der Gehäusebodenfläche beschränkt ist. Ein
vorderer Abschnitt der Preßschnecke 10 greift in das
Messerrohr 1"' ein, wobei das vordere Ende der Preßschnecke mit dem Austrittsende des Messerrohres 1"'
im wesentlichen abschließt. Die Preßschnecke 10 wird
über ein Getriebe 7 von einem Motor 6 angetrieben,
der bei einer stationären Anlage z.B. ein Elektromotor ist, dessen Drehzahl stufenlos regelbar bzw.
einstellbar ist.

Der äußere Durchmesser des in dem Messerrohr 1"'
liegenden vorderen Abschnittes der Preßschnecke 10
ist wenig kleiner als der von den Schneidkanten der
Messerleisten 11 begrenzte freie Innenraum des Messerrohres 1"', so daß die vorderen Gewindegänge der sich
drehenden Preßschnecke 10 innerhalb des Messerrohres 1"'
mit den feststehenden Schneidkanten der Messerleisten 11
scherenartig zusammenwirken.

Um die Konstruktion der kombinierten Zerkleinerungs-
und Verdichtungsanlage vor allem für naturfeuchte Biomassen so einfach wie möglich zu gestalten, sind
die Messerleisten 11 achsparallel verlegt. Es ist
klar, daß die Messerbalken innerhalb des Messerrohres auch schräg zur Achse oder schraubenlinig
verlegt sein können und zwar gegensinnig zum Drehsinn der Preßschneckke 10.

Der Durchmesser und/oder der Abstand der Schneckengänge der Preßschnecke nimmt in Förderrichtung der
Preßschnecke von ihrem hinteren zu ihrem vorderen
Ende ab. Wie für ein Ausführungsbeispiel in Fig. 4
näher gezeigt ist, verringern sich die Durchmesser
der hinteren vier Gewindegänge von 350 mm auf 100 mm,
wobei diese vier Gewindegänge von einem gedachten
konusförmigen Mantel tangiert sind. Außer den Durchmessern verringern sich bei den hinteren vier Gewindegängen die Abstände zwischen den Gewindegängen
von 300 mm über 250mm auf 150mm. Die anschließenden
vorderen sechs Gewindegänge besitzen dagegen den
gleichen Durchmesser und nur die Abstände und damit
die Steigungen der Gewindegänge ändern sich. So ist
im Beispielsfalle der Abstand zwischen dem vierten
und dem fünften Gewindegang mit 80 mm, zwischen dem
fünften und sechsten Gewindegang mit 70 mm, zwischen
dem sechsten und siebten Gewindegang einerseits und
dem siebten und achten Gewindegang andererseits jeweils mit 60 mm und zwischen dem achten und neunten
Gewindegang einerseits und dem neunten und zehnten
Gewindegang andererseits jeweils mit 50 mm gewählt.
Im Beispielsfalle greifen die vorderen 5 Gewindegänge
mit gleichen Durchmessern in das zylindrische Messerrohr 1"' ein.

Es ist klar, daß die Erfindung nicht auf derartige
Ausbildungen der Preßschnecke 10 und des ihr angepaßten Messerrohres 1"' beschränkt ist. Insbesondere kann sich das Messerrohr auch zum Austrittsende
hin konisch verjüngen. Entsprechend verjüngen sich
dann auch die Durchmesser der Gewindegänge des in
das Messerrohr eingreifenden vorderen Abschnittes
der Preßschnecke 10.

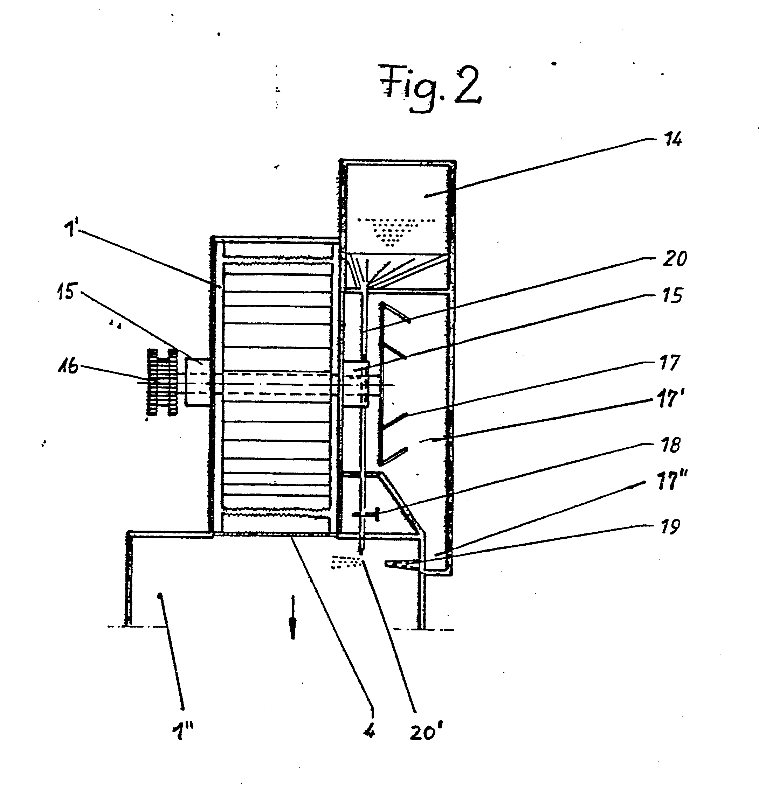

In den Trichterraum 1" zwischen dem Rotorgehäuse 1
für den Häcksler oder die Hammermühle und dem
Messerrohr 1"' ragt dicht unterhalb des Siebes 4
das Austrittsende 20' eines Austragsrohres 20, über
das erforderlichenfalls ein pulverförmiges Adsorptionsmittel aus einem Vorratsbehälter 14 unmittelbar vor
die Austrittsöffnung einer Düse 19 durch Schwerkraft
rieselt bzw. sickert, die zur gleichmäßigen Verteilung
des Adsorptionsmittels in dem Trichterraum 1" einen
oszillierenden Luftstrahl abgibt. Die erfindungsgemäße
Vorrichtung zum Austragen und Verteilen bzw. Versprühen des Adsorptionsmittels ist mehr im einzelnen
aus dem Schnitt in Fig. 2 ersichtlich.

Vor dem Austrittsende 20' des Austragrohres 20 ist
eine Einstellvorrichtung 18 angeordnet, mit der ventilartig die Austrittsmenge des pulverförmigen
Adsorptionsmittels eingestellt bzw. auch völlig abgestellt werden kann, z.B. wenn der Feuchtigkeitsgehalt
der von der Hammermühle zerkleinerten Biomasse kleiner
20% ist.

Es hat sich als besonders vorteilhaft herausgestellt,
als    Düse 19 eine an sich bekannte fluidische
Oszillatordüse ohne bewegliche Teile zu verwenden,
die einen mit hoher Frequenz in einer Ebene oder in
einem kegelförmigen Raum hin- und herschwingenden Luftstrahl abgibt. Die Austrittsöffnung des Bindemittelaustragrohres liegt dicht oberhalb der Schwingebene
des Luftstrahles.

Hierfür geeignete fluidische Oszillatoren sind z.B.
durch die Europäische Patentanmeldung Nr. 80900579.6
und die französische Patentanmeldung Nr. 7834593
bekannt geworden. Die notwendige Druckluft zum Betrieb
der fluidischen Oszillatordüse 19 kann z.B. von einem
Ventilator 17 erzeugt werden, der von der Antriebswelle des Häckslers oder der Hammermühle 3 angetrieben
wird, die in Lagerblöcken 15 außerhalb des Rotorgehäuses 1' gelagert ist und über ein Getriebe 16 von
einem nicht dargestellten Motor angetrieben wird. Der
Ventilator 17 befindet sich in einer an das Rotorgehäuse 1' angrenzenden Kammer 17',die über einen Luftführungskanal 17" an die rückseitige Eintrittsöffnung
der fluidischen Oszillatordüse 19 angeschlossen ist.
Der Rotor des Häckslers bzw. der Hammermühle wird mit
hoher Drehgeschwindigkeit angetrieben, die ausreicht,
die aufgegebene auch naturfeuchte Biomasse auf die gewünschte Teilchengröße zu zerschlagen. Durch den
Ventilator werden daher zum Betrieb der Düse ausreichende
Druckluftmengen zur Verfügung gestellt, so daß eine
separate Kompressoreinrichtung zur Erzeugung der
Druckluft für eine oder mehrere fluidische Oszillatordüsen nicht erforderlich ist.

Es ist klar, daß an die Austrittsöffnung des Luftführungskanals 17" mehrere fluidische Oszillatordüsen
parallel angeschlossen sein können. Diese Düsen können
neben- und/oder untereinander angeordnet sein.

Es kann weiterhin vorteilhaft sein, die Austrittsöffnung
der Oszillatordüse derart zur Austrittsöffnung des

0129856

Austragrohres 20 anzuordnen, daß der aus der
Oszillatordüse austretende Luftstrahl das Bindemittel ejektorartig nach Art einer Strahlpumpe aus
dem Rohr 20 absaugt.

Die Erfindung ist nicht auf die Lage und Anordnung
einer oder mehrerer Düsen 19 nahe unterhalb des
Siebes 4 des Häckslers oder der Hammermühle beschränkt.

Einer oder mehreren Düsen kann ein Austragsrohr 20
zugeordnet sein. Es kann aber auch bei mehreren
Düsen jeder Düse ein paralleles Austragsrohr 20 zugeordnet sein.
Ziel ist es in jedem Fall, das pulverförmige
Adsorptionsmittel möglichst gleichmäßig dicht unterhalb
des Siebes 4 zu verteilen, um es an den feuchten Oberflächen der zerkleinerten Biomasse zur Anlagerung zu
bringen.

Das Austragsrohr 20 kann auch in der Ventilatorkammer
17' enden, so daß das pulverförmige Bindemittel
dosiert unmittelbar in die Ventilatorkammer 17' abgegeben wird. In diesem Falle wird ein Luft-Pulvergemisch
über den Luftführungskanal 17" an eine oder mehrere
Oszillatordüsen 19 abgegeben. In einem solchen Falle
werden vorzugsweise an sich bekannte Oszillatordüsen
verwendet, die keine Rückführungskanäle besitzen.
Zweckmäßigerweise wird man dabei Oszillatordüsen aus
einem Material, wie z.B. Teflon, verwenden bzw. ihre
inneren Kammerräume mit einem solchen Material beschichten, daß innerhalb der Düsen keine Pulverteilchen hängen bleiben können.

Die Erfindung ist im übrigen nicht auf den Austrag
bzw. das Versprühen von Adsorptionsmitteln unterhalb des Siebes 4 beschränkt. So kann das Adsorptionsmittel teilweise oder ganz auch dem Rotorgehäuse
des Häckslers bzw. der Hammermühle zugegeben werden.

Das Adsorptionsmittel, z.B. Natrium- oder Kalium-
Aluminium-Silikat, dient dazu die Feuchte in Biomassen zu binden, insbesondere,wenn diese einen
Feuchtigkeitsgehalt von über 25% aufweisen. Naturfeuchte,nicht vorgetrocknete Biomassen haben Feuchtigkeitsgehalte von über 40%.

Handelt es sich also um Biomassen mit einer relativ
hohen Feuchtigkeit von über 25 %, ist es notwendig
außer nicht oxidiertem mikrokristallinem Wachs
auch Adsorptionsmittel zuzugeben. Dabei ist es wichtig,
die Vorrichtung zur feinen Verteilung des Adsorptionsmittels derart anzuordnen, daß es zeitlich vor dem
mikrokristallinen Wachs mit der zerkleinerten Oberfläche
der Biomasse in Kontakt kommt. Die Zugabe von
Adsorptionsmittel erübrigt sich vor allem dann, wenn
die Biomasse z.B. an der Luft vorgetrocknet ist und
nur noch eine Restfeuchte von weniger als 25 %, vorzugsweise weniger als 15 % Feuchtigkeit aufweist, was
von der Art der Biomasse bzw. dem Biomassengemisch
abhängt.

Die Zugabe von flüssigem nicht oxidiertem mikrokristallinem Wachs erfolgt so, daß fein verteilte
Wachströpfchen im wesentlichen erst mit der zerkleinerten Biomasse in Berührung kommen, wenn vorher
an der Oberfläche der Biomasse das Adsorptionsmittel
angelagert ist. Anderenfalls würde das mikrokristalline

Wachs die feuchte Oberfläche der zerkleinerten Biomasse vor dem Zutritt des Adsorptionsmittels abschirmen,und die Wirkung des Adsorptionsmittels zur
Bindung der überschüssigen Feuchte würde im wesentlichen nicht eintreten können. Ist die Zugabe von
Adsorptionsmittel nicht erforderlich, so kann die
hierfür vorgesehene Zugabevorrichtung für das flüssige
Mikrowachs dienen. Um in ein- und derselben erfindungsgemäßen Vorrichtung sowohl naturfeuchte Biomassen als auch vorgetrocknete Biomassen verarbeiten
zu können, sind getrennte Vorrichtungen zum Austrag
von Adsorptionsmittel und nicht oxidierentem mikrokristallinem Wachs erforderlich. Zweckmäßig wird ein
Behälter 14" zur Aufnahme von flüssigem Wachs über
eine nicht dargestellte Pumpe an eine oder mehrere
Sprühdüsen 19' angeschlossen, die mit deutlichen
Abstand von der oder den Sprühdüsen 19 z.B. nahe dem
Trichtergehäuse 1" ungeordnet sind.

In Fig. 3 ist eine weitere Zerkle-inerungs- und
Verdichtungseinheit ähnlich der nach den Fig. 1a und
1b dargestellt, in der die Preßschnecke 10 nicht waagrecht, sondern im wesentlichen senkrecht angeordnet ist.
Außerdem ist die Verdichtungstrommel 13 nach Fig. 1b
durch eine einzelne Verdichtungskammer 13' ersetzt,
deren vorderer Austritt durch eine Klappe 13" verschließbar ist, die durch eine mechanische Federkraft
in ihrer Schließstellung gehalten wird und die beim
Erreichen des gewählten Preßdruckes des von der Preßschnecke 10 in die Verdichtungskammer 13' abgegebenen
Preßlings geöffnet wird. An der Klappe 13" befindet
sich ein Seil 21, mit dem die Klappe 13" über eine
Seilzugvorrichtung 22 in die Schließstellung zurückbewegt wird. Statt einer Düse 19 in Fig. 1a und 2 sind
in der Ausführung nach Fig. 3 vier Düsen 19 vorhanden..

Die Federkraft wird durch eine oder mehrere Federn
aufgebracht, die bei der Bewegung der Klappe 13" aus
ihrer Schließ- in ihre Öffnungsstellung und umgekehrt über eine nicht dargestellte Totpunktlage
schwenken.

Zur besonderen Anordnung der Schneckenpresse gegenüber
dem Häcksler bzw. der Hammer- oder Schlagmühle wird
auf die Ansprüche         in Verbindung mit der
Zeichnung verwiesen.

Fig. 5 zeigt noch einen Querschnitt entsprechend
Fig. 2 mit einem gegenüber Fig. 2 abgewandten Vorratsbehälter 14 zur Aufnahme von pulverförmigen Adsorptionsmittel, das über ein Austragsrohr 20 entsprechend
Fig. 2 vor wenigstens eine Oszillatordüse 19 ausgetragen wird.

Anders als in Fig. 2 befindet sich in dem Behälter
14 eine mit mehreren seitlichen Rührflügeln versehene
Rührvorrichtung, die das Adsorptionsmittel aufgelockert
hält und die für einen gleichmäßigen Eintritt des
Adsorptionsmittels in das Austragsrohr 20 sorgt. Die
Rührvorrichtung wird z.B. über einen Riemenantrieb
und ein Getriebe von der Rotorwelle des Häckslers bzw.
der Hammermühle angetrieben. Statt der Rührvorrichtung
14' kann auch eine entsprechend angetriebene Rüttelvorrichtung vorgesehen sein, die das pulverförmige
Adsorptionsmittel in dem Behälter 14 durchrüttelt,
damit es gleichmäßig durch das Rohr 20 fließt.

Entsprechend dem erfindungsgemäßen Verfahren arbeitet
die erfindungsgemäße Vorrichtung wie folgt:

Unzerkleinerte, rohe Biomasse wird in den Häcksler
bzw. in die Hammermühle 3 eingebracht, die die
Biomasse      zerschlägt, bis sie durch das Sieb 4
in das Trichtergehäuse 1" fällt. Hier befindet sich
wenigstens eine vorzugsweise fluidische Oszillatordüse zum feinen Verteilen bzw. Versprühen von
Adsorptionsmittel, wie vorstehend beschrieben.
Wesentlich ist dabei, daß das Adsorptionsmittel derart
fein verteilt abgegeben wird,    daß eine gleichmäßige und intensive Durchmischung der zerkleinerten
Biomasse mit dem Adsorptionsmittel erfolgt, bevor
das nicht oxidierte mikrokristalline Wachs als
Bindemittel zugemischt wird.

Das Adsorptionsmittel besitzt vorteilhafterweise eine
dreidimensionale netzartige Kristallstruktur, die ein
Molekularsieb bildet, wobei die Durchmesser der Hohlräume größer als die Moleküldurchmesser der zu
adsorbierenden Hydrosubstanzen, insbesondere Wasser,
jedoch im wesentlichen kleiner als die Molekulardurchmesser der in der Luft hauptsächlich enthaltenden Gase
(Sauerstoff, Stickstoff) sind.

Vorzugsweise besteht das Adsorptionsmittel aus einem
Kalium- oder Natriumsilikat mit Porengrößen zwischen
3 bis 10 Å, insbesondere 3 oder 4 Å. Ein Kalium-
Aluminium-Silikat mit Porengrößen von 3 Å ist unter
dem Handelsnamen Sylosiv A3 im Handel. Ein Natrium-
Aluminium-Silikat mit Porengrößen von 10 Å ist unter dem
Handelsnamen Sylosiv A10 in Pulverform erhältlich.

Die Herstellung dieser Stoffe erfolgt z.B. durch Umsetzung wässriger Natrium-Aluminat- und Natrium-Silikatlösung. Entsprechende Wahl des stöchiometrischen Verhältnisse der Reaktanten sowie der Reaktionstemperatur bestimmen die Porengröße der dreidimensionalen netzartigen Kristallstruktur.

Das nach der Herstellung noch vorhandene Kristallwasser wird durch Aktivierung bei hoher Temperatur aus den Kristallhohlräumen entfernt, die somit zur erneuten Adsorption von Feuchtigkeit (Wasser) aus dem zerkleinerten Gut zur Verfügung steht. Wegen des ausgeprägten polaren Charakters wird Wasser besonders stark von Natrium- und Kalium-Aluminium-Silikat adsorbiert. Auch bei sehr niedrigen Feuchtigkeitswerten oder Wasserdampfpartialdrücken kann Natrium- oder Kalium-Aluminium-Silikat mehr als 15 % seines Gewichtes an Wasser festhalten. Diese hohe Adsorptionskapazität unterscheidet Natrium- oder Kalium-Aluminium-Silikat von anderen Adsorptionsmitteln wie z.B. Kieselgel.

Nicht oxidierte mikrokristalline Wachse sind bekanntlich reine Kohlenwasserstoffe mineralischen Ursprungs. Im deutlichen Unterschied zu Paraffinen sind diese Wachse durch eine besonders feinkristalline Struktur gekennzeichnet. Man unterscheidet Mikrohartwachse und plastische bzw. weiche Mikrowachse. Die plastischen bzw. weichen Mikrowachse sind weniger kristallin als die Paraffine aber auch als die Mikrohartwachse. Der Grund hierfür ist der höhere Gehalt an verzweigten und alicylischen Kohlenwasserstoffen.

Es sind verschiedenartige Mikrowachse auf dem Markt erhältlich, die im Erstarrungspunkt, Härte, Viskosität und Klebrigkeit differieren. Erfindungsgemäß werden plastische bzw. weiche Mikrowachse bevorzugt. Ein Mikrowachs mit einem Erstarrungspunkt von 72 - 75°C,

einem Tropfpunkt bei 76 - 80°C und einer
Penetrationszahl bei 25° (DIN 51 579) von 23 - 28
ist für die erfindungsgemäßen Zwecke gut geeignet.
Es wird unter der Bezeichnung S-355 von der Firma
Georg Schütz GmbH, 6370 Oberursel vertrieben. Es
ist klar, daß die Erfindung nicht auf die Verwendung dieses plastischen Mikrowachses beschränkt
ist.

Klebrig-plastische Mikrowachse werden bekanntlich
vorzugsweise oder in Abmischung mit geeigneten
Additiven als sogenannte "Kaschierwachse" eingesetzt, während trocken-plastische Mikrowachstypen
für Beschichtungszwecke Verwendung finden. Weitere
bekannte Einsatzgebiete von plastischen Mikrowachsen
sind Licht-Schutzwachse für die Gummiindustrie,
Korrosionsschutzmittel, Isolationsmittel für elektrische
und elektronische Bauteile, Inprägnierungsmittel,
Kosmetik, Dentalwachse, Kerzenherstellung, Bleistifte,
Putzmittel, Schmelzkleber, Formwachse aus der
Formereibranche etc.

Wesentlich ist, daß die nicht oxidierten Mikrowachse
einschließlich der erfindungsgemäß besonders vorteilhaft verwendbaren plastischen bzw. relativ weichen
Mikrowachse, wie z.B. das vorstehend angegebene
plastische Mikrowachs S-355, die Anforderungen nach
der Empfehlung XXV des Bundesgesundheitsamtes erfüllen,
also für die Umwelt völlig unproblematisch sind.

Die in der Industrie für die verschiedensten Zwecke,
insbesondere in der Formereibranche verwendeten nicht
oxidierten Mikrowachse müssen nach ihrem Gebrauch als

Abfallwachse mit hohem Kostenaufwand entsorgt
werden. Es hat sich nun herausgestellt, daß solche
Abfallwachse als Recycling-Wachse nach dem erfindungsgemäßen Verfahren verwendbar sind. Solche
Wachse werden aufgeschmolzen und gegebenenfalls
vor ihrem Einsatz als Bindemittel für zerkleinerte
Biomassen mittels einfacher Filter gereinigt.

Wesentlich ist für das erfindungsgemäße Verfahren,
daß die nicht oxidierten plastischen oder weichen
Mikrowachse in Kombination mit anorganischen
Adsorptionsmitteln, insbesondere Kalium- oder
Natriumaluminiumsilikat gut verträglich sind. Auf
diese Weise kann der Verbrauch an Mikrowachs auch
bei naturfeuchten Biomassen mit hohen Feuchtigkeitsanteilen überraschend niedrig gehalten werden.

Aufgrund des relativ niedrigen Erstarrungspunktes
der plastischen bzw. weichen Mikrowachse sind die
erfindungsgemäßen Preßlinge aus zerkleinerten Biomassen bereits beim Verlassen der Preßvorrichtung
fest und unzerbrechlich. Die Lagerung der Preßlinge
auch im Freien ist praktisch unbegrenzt, da sie
keine Feuchtigkeit aufnehmen. Die Preßlinge sind daher
besonders formstabil. Überraschend war, daß diese
Ergebnisse auch mit relativ geringen Zugabemengen
an Mikrowachs auch mit naturfeuchten Biomassen ohne
vorherige Trocknung erreichbar sind.

Walter Ries
6990 Bad Mergentheim

P a t e n t a n s p r ü c h e

1. Verfahren zur Erzeugung von lagerfähigen Preßlingen,
wie Briketts, Cobs oder Pellets, insbesondere als Biobrennstoff, vorwiegend aus naturfeuchten land-, forst- und
gartenwirtschaftlichen Reststoffen und/oder aus entsprechend verwertbaren Haus- und Gewerbemüllbestandteilen
durch Zerkleinerung der Rest- bzw. Müllbestandteile und
durch anschließende Verdichtung des Zerkleinerungsgutes zu
den Preßlingen, dadurch gekennzeichnet, daß dem Zerkleinerungsgut nicht oxidisches mikrokristallines Wachs
(Mikrowachs) feinverteilt zugemischt wird und daß in Abhängigkeit von dem Feuchtigkeitsgehalt des Zerkleinerungsgutes vorher ein mit dem Mikrowachs verträgliches Adsorptionsmittel feinverteilt beigemengt wird.

2. Verfahren nach Anspruch 1, dadurch gekennzeichnet, daß
das Mikrowachs plastische bzw. weiche Eigenschaften aufweist und dementsprechend relativ höhere Anteile an verzweigten und alicychischen Kohlenwasserstoffen besitzt.

3. Verfahren nach Anspruch 1 oder 2, dadurch gekennzeichnet,
daß das Mikrowachs Recyclingwachs (Formerei-Recyclingwachs)
ist.

4. Verfahren nach einem der Ansprüche 1 bis 3, dadurch gekennzeichnet, daß das Mikrowachs in flüssiger Form über
Sprühdüsen dem Zerkleinerungsgut zugemischt wird.

- 2 -

5. Verfahren nach Anspruch 1, dadurch gekennzeichnet, daß das Adsorptionsmittel eine dreidimensionale netzartige Kristallstruktur besitzt, die ein Molekularsieb bildet, wobei die Durchmesser der Hohlräume größer als die Moleküldurchmesser der zu adsorbierenden Feuchtigkeit, jedoch im wesentlichen kleiner als die Moleküldurchmesser der in der Luft hauptsächlich enthaltenen Gase (Sauerstoff, Stickstoff) sind.

6. Verfahren nach Anspruch 5, dadurch gekennzeichnet, daß das Adsorptionsmittel ein Metall-Aluminium-Silikat ist.

7. Verfahren nach Anspruch 6, dadurch gekennzeichnet, daß das Aluminium-Silikat ein Kalium- oder Natrium-Aluminium-Silikat mit Porengrößen zwischen 3 bis 10 $\overset{o}{A}$, insbesondere 3 oder 4 $\overset{o}{A}$ ist.

8. Verfahren nach Anspruch 6 oder 7, dadurch gekennzeichnet, daß das Aluminium-Silikat als Pulver zugegeben wird.

9. Vorrichtung zur Durchführung des Verfahrens nach einem oder mehreren der vorstehenden Ansprüche, dadurch gekennzeichnet, daß zur Zerkleinerung des zu verarbeitenden Gutes wenigstens ein Häcksler oder Hammer- bzw. Schlagmühle vorgesehen ist, der bzw. die innerhalb eines Gehäuses oberhalb wenigstens einer Schneckenpresse angeordnet ist.

10. Vorrichtung nach Anspruch 9, dadurch gekennzeichnet, daß das hintere Ende der Schneckenpresse in einem erweiterten Gehäuseteile gelagert ist, das trichterförmig an ein verengtes Gehäuseteil anschließt, in das das
vordere Ende der Schneckenpresse mit geringem Spiel
eingreift und das innenseitig mit Leisten bestückt
ist, die über den inneren Umfang des verengten Gehäuseteiles gleichmäßig verteilt in geringem Abstand
aufeinanderfolgen und Schneidkanten aufweisen, die
den freien Innenraum des verengten Gehäuseteiles bestimmen, an das koaxial ein rohrförmiger Verdichtungsraum anschließt.

11. Vorrichtung nach Anspruch 9 oder 10, dadurch gekennzeichnet, daß der Durchmesser und/oder der Abstand der Schneckengänge der Schneckenpresse in Preßrichtung vom hinteren zum vorderen Ende abnehmen.

12. Vorrichtung nach Anspruch 10, dadurch gekennzeichnet,
daß das vordere Auswurfende des Verdichtungsraumes
von einer in Schließrichtung durch Federkraft belasteten, sich bei einem bestimmten Preßdruck öffnenden
Klappe verschlossen ist.

13. Vorrichtung nach Anspruch 12, dadurch gekennzeichnet,
daß der Verdichtungsraum Teil eines drehbaren Trommelgehäuses mit mehreren gleichartigen Verdichtungsräumen
ist.

14. Vorrichtung nach Anspruch 9, dadurch gekennzeichnet,
daß zur Zugabe des Flüssigwachses wenigstens eine Sprühvorrichtung in dem Raum zwischen der Zerkleinerungsvorrichtung und der Verdichtungsvorrichtung vorgesehen ist
und daß gegebenenfalls eine zweite Sprühvorrichtung zur
Zugabe des Adsorptionsmittels vorgesehen ist, die in
Förderrichtung des Zerkleinerungsgutes der ersten
Sprühvorrichtung vorgeschaltet ist.

15. Vorrichtung nach einem oder mehreren der vorstehenden Ansprüche 9 bis 14, dadurch gekennzeichnet, daß der Häcksler bzw. die Hammer- oder Schlagmühle in Verbindung mit wenigstens einer Schneckenpresse und einem Verdichtungsraum eine Baueinheit bilden.

16. Vorrichtung nach Anspruch 14, dadurch gekennzeichnet, daß wenigstens eine der beiden Sprühvorrichtungen wenigstens eine fluidische Oszillator-Düse ohne bewegliche Teile aufweist.

17. Vorrichtung nach Anspruch 16, dadurch gekennzeichnet, daß die zweite Sprühvorrichtung zum Versprühen von pulverförmigen Adsorptionsmittel wenigstens eine Oszillator-Düse zur Abgabe eines oszillierenden Luftstrahles abgibt und daß unmittelbar vor und oberhalb des Ausganges der Oszillator-Düse wenigstens eine Dosiervorrichtung zur Abgabe des Adsorptionsmittels im freien Fall vorgesehen ist.

# Fig.1a

# Fig.1b

# Fig. 2

Fig.3

Fig. 4

Fig. 5